# EUROPÄISCHE PATENTSCHRIFT

(11) **EP 0 529 117 B1**
(45) Veröffentlichungstag und Bekanntmachung des Hinweises auf die Patenterteilung: **02.03.1994**
(21) Anmeldenummer: 91114113.3
(22) Anmeldetag: 22.08.1991
(51) Int. Cl.: B60K 41/06

(54) **Steuerung für einen Kraftfahrzeugantrieb mit einem automatischen Getriebe**
Control device for a vehicle power train with an automatic transmission
Commande de train moteur de véhicule automobile comportant une transmission automatique

(43) Veröffentlichungstag der Anmeldung: 03.03.1993
(73) Patentinhaber: SIEMENS AKTIENGESELLSCHAFT, 80333 München (DE)
(72) Erfinder: Graf, Friedrich, Dipl.-Ing. (FH), W-8400 Regensburg (DE); Brueckner, Dieter, Dipl.-Ing. (FH), W-8400 Regensburg (DE)

(56) Entgegenhaltungen:
- DE-A- 2 935 916
- DE-A- 3 712 499
- DE-A- 3 830 938
- US-A- 4 945 481

## Beschreibung

Die Erfindung betrifft eine Steuerung für einen Kraftfahrzeugantrieb nach dem Oberbegriff von Anspruch 1.

Eine solche Steuerung wird für Kraftfahrzeugantriebe mit automatischen Getrieben eingesetzt, die eine Motorsteuerung und eine davon getrennte Getriebesteurung aufweisen. Das Motorsteuergerät einer bekannten Steuerung enthält mehrere Kennfelder für unterschiedliche Betriebszustände des Motors (DE 29 35 916 C2). Beim Einleiten eines Schaltvorgangs sendet die Getriebesteuerung an die Motorsteuerung ein Eingriffssignal durch das von einem ersten auf ein zweites Kennfeld umgeschaltet wird. Das zweite Kennfeld enthält reduzierte Werte des Motordrehmoments, um beispielsweise den Momentenanstieg durch das Greifen eines Freilaufs in dem automatischen Getriebe zu dämpfen und damit den Schaltruck zu verringern und den Verschleiß von Reibelementen in dem Getriebe vermindern.

Durch eine andere bekannte Steuerung für Kraftfahrzeuge mit automatischem Getriebe soll ebenfalls der Schaltruck vermieden werden (US-A-4 945 481). Die Motor- und die Getriebesteuerung sind getrennt. In der Getriebesteuerung wird der Wert und die Dauer der Reduktion des Motordrehmoments beim Schalten ermittelt und an die Motorsteuerung übertragen. Mit Parametern wird der Wert der Drehmomentreduktion in untereinander gleiche Teile geteilt. Den Parametern werden digitale Werte zugeordnet und diese an die Motorsteuerung übermittelt.

Bei einer einseitig durch die Getriebesteuerung eingeleiteten Verstellung des Zündwinkels können Schwierigkeiten auftreten, wenn die Motorsteurung die gewünschte Zündwinkelverstellung nicht durchführen kann. Dies ist z.B. dann der Fall, wenn bei einem vorgegebenen Grundkennfeld zur Bestimmung des Zündwinkels dieser gegenüber dem Grundwert nur begrenzt verstellt werden kann. Eine solche Einschränkung ist vor allem dann zu erwarten, wenn die Motorsteuerung mit einer Klopfregelung versehen ist und diese aktiv ist, wobei deren Stellgröße ebenfalls der Zündwinkel ist. Probleme können sich auch bei Schaltungen ergeben, die in Bereichen stattfinden, in denen eine erhöhte Klopfneigung besteht. Die Klopfneigung wird nämlich durch eine Hochschaltung noch vergrößert. Eine aktivierte Klopfregelung führt in der Regel zu einem Leistungsverlust, der bei dem Fahrer des Kraftfahrzeugs zu dem Wunsch nach mehr Leistung und demzufolge zu einer von ihm durch durchtreten des Gaspedals ausgelösten Rückschaltung führen kann. Dadurch ergibt sich ein insgesamt ungünstiges Schaltverhaltens des automatischen Getriebes. Außerdem überschneiden sich in einem solchen Fall die Klopfregelung und der Motoreingriff durch das Getriebe in unübersichtlicher Weise.

Der Erfindung liegt die Aufgabe zugrunde, die Steuerung des Kraftfahrzeugantriebs zu verbessern und auch in den genannten Problembereichen ein komfortables Schaltverhalten und einen geringen Verschleiß der Reibelemente der Kupplung zu erreichen.

Diese Aufgabe wird durch eine Steuerung mit den Merkmalen von Patentanspruch 1 gelöst.

Vorteilhafte Weiterbildungen der Erfindung sind in den Unteransprüchen enthalten.

Die Vorteile der Erfindung liegen insbesondere darin, daß die Schaltvorgänge ruckfrei ablaufen und ein zu häufiges Hoch- und Rückschalten vermieden wird.

Ausführungsbeispiele der Erfindung werden im folgendem anhand der Zeichnungen erläutert. Es zeigen:
- Figur 1: eine erfindungsgemäße Steuerung für einen Kraftfahr zeugantrieb mit automatischem Getriebe, als Block schaltbild dargestellt,
- Figur 2: Einzelheiten eines ersten Ausführungsbeispiels der Steuerung nach Figur 1 und
- Figur 3: Einzelheiten eines zweiten Ausführungsbeispieles der Steuerung nach Figur 1.

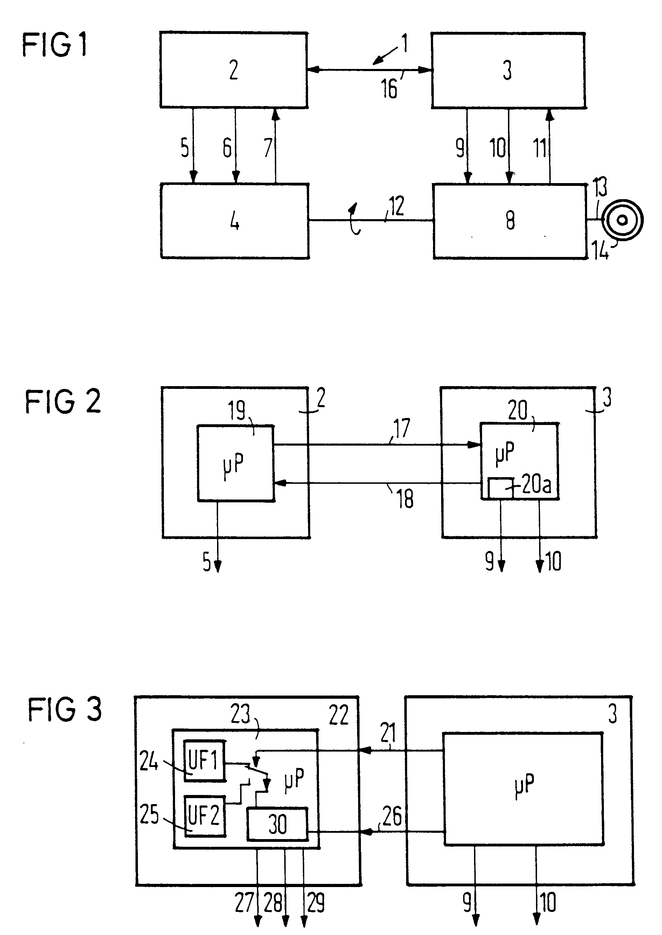

Eine Kraftfahrzeugantrieb-Steuerung 1 weist eine Motorsteuerung 2 und eine Getriebesteuerung 3 auf (Figur 1). Die Motorsteuerung 2 steuert einen Motor 4 und ist zu diesem Zweck mit ihr durch - soweit hier von Interesse - drei Signalleitungen verbunden: über eine Leitung 5 werden Signale zum Steuern des Zündzeitpunkts der Zündkerzen und über eine Leitung 6 Signale zum Steuern der Einspritzventile von der Motorsteuerung 2 an den Motor 4 übertragen. Über eine Leitung 7 werden Sensorsignale, z.B. von Klopfsensoren, von dem Motor 4 zu der Motor steuerung 2 übertragen.

Die Getriebesteuerung 3 steuert ein Getriebe 8. Sie ist zu diesem Zweck mit ihm über drei Signalleitungen verbunden: über eine Leitung 9 wird der Kupplungsdruck im Getriebe gesteuert, über eine Leitung 10 werden Schaltsignale zum Schalten der einzelnen Gänge an das Getriebe übermittelt. Über eine Leitung 11 gelangen Sensorsignale - z.B. Drehzahlsignale - von dem Getriebe 8 zu der Getriebesteuerung 3. Sowohl die Leitung 7 als auch die Leitung 11 stehen hier nur als Beispiele für eine Vielzahl von jeweils zu übertragenden Sensorsignalen.

Der Motor 4 ist durch eine Antriebswelle 12 mit dem Getriebe 8 verbunden. Von dem Ausgang des Getriebes 8 führt eine Haupt- oder Abtriebswelle 13 zu dem Achsantrieb, der hier symbolisch nur durch ein Rad 14 dargestellt ist.

Die Motorsteuerung 2 und die Getriebesteuerung 3 sind durch eine bidrektionale Datenleitung 16 verbunden, über die Daten in beiden Richtungen übertragen werden. Einzelheiten über diese Daten werden anhand der nachfolgenden Figuren erläutert.

Die erwähnte bidirektionale Datenleitung ist in Figur 2 durch zwei unidirektionale Datenleitungen dargestellt: eine Datenleitung 17 von der Motorsteuerung 2 zu der Getriebesteuerung 3 und eine Datenleitung 18 in umgekehrter Richtung. Die beiden Datenleitungen 17 und 18 verbinden einen in der Motorsteuerung 2 enthaltenen Rechner 19 mit einem in der Getriebesteuerung 3 enthaltenen Rechner 20.

Über die Datenleitung 17 sendet der Rechner 19 der Motorsteuerung 2 an den Rechner 20 der Getriebesteuerung 3 eine Information über die momentane maximale Intensität des Motoreingriffs, d.h. über den Anteil, um den das Motordrehmoment maximal reduziert werden kann, z.B. in Form der maximal möglichen Zündwinkelverstellung in Richtung "spät". Daraufhin erzeugt die Getriebesteuerung 3 ein Signal, durch das der Arbeitsdruck der Kupplungen angepaßt wird und sendet ihn über die Leitung 9 an das Getriebe. Unter den eingangs geschilderten problematischen Betriebsbedingungen wird dabei der Arbeitsdruck erhöht, um eine zu lange Schleifzeit der Reibungselemente in dem Getriebe zu verhindern, da die von der Getriebesteuerung angeforderte Drehmoment-Reduktion von der Motorsteuerung nicht ganz erreicht werden kann und somit ein höheres Drehmoment bei der Schaltung übertragen werden muß. Die genannte Information wird laufend oder in regelmäßigen, vorgegebenen Zeitabständen von der Getriebesteuerung 2 an die Motorsteuerung 3 übertragen.

Die Getriebesteuerung 3 überträgt dann, wenn eine Schaltung durchzuführen ist, über die Datenleitung 18 ein Auslösesignal für einen Motoreingriff an die Motorsteuerung 2, die daraufhin das Drehmoment verringert, und zwar in dem von dem Auslösesignal vorgegebenen Umfang.

Bei einer anderen Variante der Steuerung bewirken die von der Motorsteuerung 2 über die Datenleitung 17 an die Getriebesteuerung 3 übertragenen Daten, daß der Schaltzeitpunkt derart verlegt wird, daß die Schaltung erst in einem Arbeitsbereich des Motors mit kleinerer Klopfneigung erfolgt, wobei die Klopfneigung nach der Schaltung nicht größer wird.

Bei einer dritten Variante der Steuerschaltung bewirkt die über die Datenleitung 17 übermittelte Information, daß eine in der Getriebesteuerung 3 enthaltene Druck-Adaptionsschaltung 20a desaktiviert wird. Solange sie in Betrieb ist, sorgt diese Adaptionsschaltung 20 dafür, daß der Arbeitsdruck der Kupplungen in dem Getriebe so geregelt wird, daß die Schleifzeit der Reibungselemente des Getriebes immer in dem richtigen Bereich bleibt. Als Beispiel für so einen Schleifzeit-Bereich seien 500 ms ± 80 ms genannt. Diese Schleifzeit kann für Schaltungen in den genannten Problemfällen kurzzeitig überschritten werden.

Bei den vorstehend beschriebenen Ausführungsbeispielen überwiegt in der Vorbereitungsphase eines Schaltvorgangs die Beeinflussung der Getriebesteuerung durch die Motorsteuerung. In einem weiteren Ausführungsbeispiel überwiegt hingegen in der Vorbereitungsphase die Beeinflussung der Motorsteuerung durch die Getriebesteuerung. Die Getriebesteuerung 3 sendet über eine Leitung 21 (Fig.3) Daten, die die Schaltung ankündigen, an die Motorsteuerung 22. Der Rechner 23 dieser Motor steuerung 22 enthält u.a. zwei Grundkennfelder 24 und 25 für die Zündung. Durch die Schaltungs-Vorankündigung wird von einem Grundkennfeld 24 auf das andere Grundkennfeld 25 umgeschaltet und dadurch die Regeltiefe für die Klopfregelung vermindert.

Wenn dann über eine Datenleitung 26 das Auslösesignal von der Getriebesteuerung 3 zu der Motorsteuerung 22 gelangt, führt diese eine Momentenreduktion, z.B. durch Spätverstellung der Zündung, auf Grund des geänderten Grundkennfelds durch. Bewirkt wird die Spätverstellung der Zündung durch ein Signal, das von einer Drehmoment-Reduktionsschaltung 30 in der Motorsteuerung 22 über eine Leitung 27 an den Motor übermittelt wird.

Das Drehmoment kann bei Fahrzeugen, die mit einer verstellbaren Nockenwelle versehen sind, auch durch eine Vestellung der Nockenwelle bewirkt werden. Das entsprechende Signal wird von der Reduktionsschaltung 30 über eine Leitung 28 ausgegeben. Eine weitere Möglichkeit ist die Aussendung eines Signals über eine Leitung 29 an eine - in der Zeichnung nicht dargestellte - Einrichtung zum Verstellen der Saugrohrlänge. Auch durch eine solche Vestellung kann das Motordrehmoment während einer Schaltung verändert, d.h. in der Regel verringert werden. Die Drehmomentreduktion wird in allen drei Fällen durch das über die Datenleitung 26 zu der Drehmoment-Reduktionsschaltung 30 gelangende Auslösesignal ausgelöst.

## Patentansprüche

1. Steuerung für einen Kraftfahrzeugantrieb mit einem automatischen Getriebe (8), die aufweist
- eine Motorsteuerung (2), durch die das Drehmoment des Motors gesteuert wird,
- eine Getriebesteuerung (3), durch die die Schaltvorgänge des Getriebes (8) gesteuert werden und durch die die Motorsteuerung (2) mit einem Auslösesignal zu einer Drehmomentänderung veranlaßt wird, die einen ruckfreien Schaltvorgang bewirkt, und
- einen dem Auslösesignal vorausgehenden Datenaustausch zwischen der Motorsteuerung (2) und der Getriebesteuerung (3),
**dadurch gekennzeichnet,** daß
von der Motorsteuerung (2) an die Getriebesteuerung (3) Daten in Form eines Anteils, um den das Drehmoment des Motors maximal für den Schaltvorgang reduziert werden kann, übermittelt werden.

2. Steuerung nach Anspruch 1, dadurch gekennzeichnet, daß durch die Getriebesteuerung (3) der Arbeitsdruck der Kupplungen des Getriebes (8) derart an die maximale Drehmomentänderung angepaßt wird, daß die Schleifzeit der Kupplungen beim Schaltvorgang in dem zulässigen Bereich gehalten wird.

3. Steuerung nach Anspruch 1, dadurch gekennzeichnet, daß eine Adaptionsschaltung (20a), durch die der Arbeitsdruck der Kupplungen des Getriebes (8) so gesteuert wird, daß die Schleifzeit der Kupplungen in dem zulässigen Bereich gehalten wird, während des Schaltvorgangs desaktiviert wird.

4. Steuerung nach Anspruch 1, dadurch gekennzeichnet, daß von der Getriebesteuerung (3) an die Motorsteuerung (2) Daten in Form einer Vorankündigung eines vorgesehenen Schaltvorganges übermittelt und daraufhin durch die Motorsteuerung ein Regel- oder Steuerbereich für den Motor verändert wird.

5. Steuerung nach Anspruch 4, dadurch gekennzeichnet, daß durch die Motorsteuerung (2) der Regelbereich für eine Klopfregelung verkleinert wird.

6. Steuerung nach Anspruch 4, dadurch gekennzeichnet, daß durch die Motorsteuerung (2) der Regelbereich für das Motordrehmoment durch Verstellen der Nockenwelle verkleinert wird.

7. Steuerung nach Anspruch 1, dadurch gekennzeichnet, daß die Motorsteuerung (2) und die Getriebesteuerung (3) durch eine bidirektionale Datenleitung (16) miteinander verbunden sind.

8. Steuerung nach Anspruch 1, dadurch gekennzeichnet, daß die Motorsteuerung (2) eine Drehmoment-Reduktionsschaltung (30) aufweist.

## Claims

1. Control device for a motor vehicle drive having an automatic transmission (8), which control device has
- an engine control device (2), by means of which the torque of the engine is controlled,
- a transmission control device (3), by means of which the shifts of the transmission (8) are controlled and by means of which the engine control device (2) is prompted by a trip signal to a change in torque which effects a jerk-free shift, and
- an exchange of data, preceding the trip signal, between the engine control device (2) and the transmission control device (3), characterized in that data are transmitted from the engine control device (2) to the transmission control device (3) in the form of a proportion by which the torque of the engine can at most be reduced for the shift.

2. Control device according to Claim 1, characterized in that by means of the transmission control device (3) the working pressure of the clutches of the transmission (8) is adapted to the maximum change in torque in such a way that the slipping time of the clutches is kept in the permissible range during shifting.

3. Control device according to Claim 1, characterized in that an adaptation circuit (20a), by means of which the working pressure of the clutches of the transmission (8) is controlled in such a way that the slipping time of the clutches is kept in the permissible range, is deactivated during the shift.

4. Control device according to Claim 1, characterized in that data are transmitted from the transmission control device (3) to the engine control device (2) in the form of a preannouncement of an envisaged shift, and thereupon a regulation or control range for the engine is changed by the engine control device.

5. Control device according to Claim 4, characterized in that the regulation range is reduced for knock control by the engine control device (2).

6. Control device according to Claim 4, characterized in that the engine control device (2) reduces the regulation range for the engine torque by adjusting the cam shaft.

7. Control device according to Claim 1, characterized in that the engine control device (2) and the transmission control device (3) are connected to one another by a bidirectional data line (16).

8. Control device according to Claim 1, characterized in that the engine control device (2) has a torque-reducing circuit (30).

## Revendications

1. Dispositif de commande pour un train moteur de véhicule automobile comportant une transmission automatique (8), qui possède
- une unité (2) de commande du moteur, qui commande le couple du moteur,
- une unité (3) de commande de la transmission, qui commande les processus de commutation de la transmission (8) et qui commande l'unité (2) de commande du moteur au moyen d'un signal de déclenchement pour que cette unité commande une modification du couple, qui déclenche un processus de commutation sans à-coup, et
- un échange de données, qui précède le signal de déclenchement, entre l'unité (2) de commande du moteur et l'unité (3) de commande de la transmission,
caractérisé par le fait que l'unité (2) de commande du moteur retransmet à l'unité (3) de commande de la transmission des données sous la forme d'une fraction, dont le couple du moteur peut être réduit au maximum pour l'opération de commutation.

2. Dispositif de commande suivant la revendication 1, caractérisé par le fait que la pression de travail des embrayages de la transmission (8) est adaptée par l'unité (3) de commande de la transmission à la variation maximale du couple de telle sorte que le temps de réaction des embrayages lors de l'opération de commutation est maintenu dans la gamme admissible.

3. Dispositif de commande suivant la revendication 1, caractérisé par le fait qu'un circuit d'adaptation (20a), au moyen duquel la pression de travail des embrayages de la transmission (8) est commandée de telle sorte que le temps de réaction des embrayages est maintenu dans la gamme admissible, est désactivé pendant le processus de commutation.

4. Dispositif de commande suivant la revendication 1, caractérisé par le fait que des données sont retransmises par l'unité (3) de commande de la transmission à l'unité (2) de commande du moteur, sous la forme d'une annonce préalable d'une opération de commutation prévue et qu'ensuite, une gamme de régulation ou une gamme de commande pour le moteur est modifiée par l'unité de commande du moteur.

5. Dispositif de commande suivant la revendication 4, caractérisé par le fait que la gamme de réglage pour le réglage du cognement est réduite par l'unité (2) de commande du moteur.

6. Dispositif de commande suivant la revendication 4, caractérisé par le fait que la gamme de réglage du couple du moteur est réduite par réglage de l'arbre à cames, par l'unité (2) de commande du moteur.

7. Dispositif de commande suivant la revendication 1, caractérisé par le fait que l'unité (2) de commande du moteur et l'unité (3) de commande de la transmission sont reliées entre elles par une ligne bidirectionnelle de transmission de données (16).

8. Dispositif de commande suivant la revendication 1, caractérisé par le fait que l'unité (2) de commande du moteur comprend un circuit (30) de réduction du couple.
